(19) Europäisches Patentamt / European Patent Office / Office européen des brevets

(11) **EP 4 723 192 A1**

(12) **EUROPEAN PATENT APPLICATION**
published in accordance with Art. 153(4) EPC

(43) Date of publication:
**08.04.2026 Bulletin 2026/15**

(21) Application number: **23943475.6**

(22) Date of filing: **26.12.2023**

(51) International Patent Classification (IPC):
$H01M\ 4/131^{(2010.01)}$    $H01M\ 4/525^{(2010.01)}$
$H01M\ 4/505^{(2010.01)}$    $H01M\ 10/0525^{(2010.01)}$

(52) Cooperative Patent Classification (CPC):
Y02E 60/10

(86) International application number:
**PCT/CN2023/141900**

(87) International publication number:
**WO 2025/001004 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.06.2023 CN 202310787285**

(71) Applicant: **Sunwoda Mobility Energy Technology Co., Ltd.**
**Shenzhen, Guangdong 518107 (CN)**

(72) Inventors:
• **ZENG, Cheng**
**Shenzhen, Guangdong 518107 (CN)**
• **LIAO, Huaping**
**Shenzhen, Guangdong 518107 (CN)**

(74) Representative: **Metida**
**Gyneju str. 16**
**01109 Vilnius (LT)**

(54) **LITHIUM-ION BATTERY AND ELECTRIC DEVICE**

(57) Provided herein is a lithium-ion battery and an electrical apparatus. A cathode active material of the lithium-ion battery in this disclosure includes lithium nickel cobalt manganese oxide and manganese iron lithium oxide, and a cathode of the battery satisfies a formula as follows: $0.5 \leq R = 10 \times \omega \times PD / \ln(H) \leq 4$; where $\omega$ is a weight percentage of manganese iron lithium oxide in the cathode active material; PD is a compaction density of the cathode in $g/cm^3$; H is an enthalpy value of the cathode in J/g.

10 µm    EHT = 3.00 kV    Mag = 1.00 K X    Signal A = SE2    WD = 5.8 mm    ZEISS

FIG. 1

**Description**

**CROSS-REFERENCE TO RELATED APPLICATION**

This disclosure claims the benefit of Chinese patent application No. 202310787285.7, filed on June 29, 2023, which is incorporated herein by reference in its entirety.

**TECHNICAL FIELD**

This disclosure relates to the field of battery technology, and particularly to a lithium-ion battery and an electrical apparatus.

**BACKGROUND**

Lithium-ion batteries have become a preferred power system for electric vehicles due to their high energy density, high working voltage, and excellent cycling performance. Among lithium-ion batteries, lithium-ion batteries based on nickel-cobalt-manganese (NCM) ternary cathode materials have higher specific capacity and platform voltage than lithium iron phosphate ($LiFePO_4$) batteries, thus enabling higher energy density and consequently a longer driving range for electric vehicles.

However, as the content of Ni increases, the thermal stability of nickel-cobalt-manganese ternary material continuously decreases, rendering high-nickel ternary batteries prone to thermal runaway, which poses a risk of thermal propagation within a battery module. When subjected to heating in a thermal chamber above 130°C, these batteries are prone to thermal runaway, resulting in phenomena such as fire and smoke emission. The thermal stability of the battery needs to be improved.

**SUMMARY**

To address the issue of inadequate thermal stability in existing lithium-ion batteries, this disclosure provides a lithium-ion battery with excellent thermal stability. In this disclosure, by blending manganese iron lithium oxide into lithium nickel cobalt manganese oxide, and by adjusting the doping amount of manganese iron lithium oxide, the compaction density (PD, in $g/cm^3$) of the cathode and the enthalpy value (H, in J/g) of the cathode within an appropriate range, the thermal stability and safety of the lithium-ion battery are significantly improved.

To achieve the above objective, in a first aspect of this disclosure, provided herein is a lithium-ion battery, comprising a cathode and an anode, wherein the cathode comprises a cathode current collector and a cathode active layer arranged on at least one surface of the cathode current collector, the cathode active layer comprises a cathode active material, and the cathode active material comprises lithium nickel cobalt manganese oxide and manganese iron lithium oxide;

wherein the cathode satisfies: $0.5 \leq R \leq 4$; and
wherein $R = 10 \times \omega \times PD / \ln(H)$, $\omega$ is a weight percentage of the manganese iron lithium oxide in the cathode active material, PD is a compaction density of the cathode in $g/cm^3$, and H is an enthalpy value of the cathode at a battery state of charge (SOC) of 100% in J/g.

The enthalpy value is measured by differential scanning calorimetry (DSC), and the value is determined by integrating a peak area of a DSC curve.

In some embodiments, the cathode satisfies: $1 \leq R \leq 3$.

In some embodiments, the $\omega$ is 20% to 50%.

In some embodiments, the PD is 2.6 $g/cm^3$ to 3.0 $g/cm^3$.

In some embodiments, the H is 500 J/g to 1000 J/g.

In some embodiments, in the lithium nickel cobalt manganese oxide, a molar percentage of nickel, denoted as n1, is at least 80%, wherein the molar percentage n1 is 100% × (moles of nickel in the lithium nickel cobalt manganese oxide)/ (total moles of all non-lithium metal elements in the lithium nickel cobalt manganese oxide).

In some embodiments, in the manganese iron lithium oxide, a molar percentage of manganese, denoted as n2, satisfies $0 \leq n2 \leq 90$, wherein the molar percentage n2 is 100% × (moles of manganese in the manganese iron lithium oxide)/ (total moles of all non-lithium metal elements in the manganese iron lithium oxide).

In some embodiments, $D_{v50}$ of the lithium nickel cobalt manganese oxide is greater than $D_{v50}$ of the manganese iron lithium oxide.

In some embodiments, at least a part of the lithium nickel cobalt manganese oxide is a single crystal particle.

In a second aspect of this disclosure, provided herein is an electrical apparatus, comprising the above lithium-ion battery.

Compared with the prior art, this disclosure has the following beneficial effects:

In this disclosure, by blending manganese iron lithium oxide into lithium nickel cobalt manganese oxide, and by adjusting the doping amount of manganese iron lithium oxide, the compaction density (PD, in $g/cm^3$) of the cathode and the enthalpy value (H, in J/g) of the cathode within an appropriate range, the thermal stability and safety of the lithium-ion battery can be significantly improved.

## BRIEF DESCRIPTION OF THE DRAWINGS

FIG. 1 shows a morphology of a cathode active material on a surface of the cathode in Example 1;
FIG. 2 shows a thermal chamber test curve of the lithium-ion battery in Example 6;
FIG. 3 shows a thermal chamber test curve of the lithium-ion battery in Comparative Example 1.

## DETAILED DESCRIPTION

To better illustrate the objective, technical solution and advantages of this disclosure, the following embodiments are provided to illustrate this disclosure, but are not intended to limit the scope of this disclosure in any form. Unless otherwise specified, the reagents, methods and equipment used in this disclosure are conventional reagents, methods and equipment in the technical field. Unless otherwise specified, the reagents and materials used in this disclosure are purchased from the market.

In an embodiment, provided herein is a lithium-ion battery, comprising a cathode and an anode, wherein the cathode comprises a cathode current collector and a cathode active layer arranged on at least one surface of the cathode current collector, the cathode active layer comprises a cathode active material, and the cathode active material comprises lithium nickel cobalt manganese oxide and manganese iron lithium oxide;

wherein and the cathode satisfies: $0.5 \leq R \leq 4$; and
wherein $R = 10 \times \omega \times PD / \ln(H)$, $\omega$ is a weight percentage of the manganese iron lithium oxide in the cathode active material, PD is a compaction density of the cathode in $g/cm^3$, and H is an enthalpy value of the cathode at a battery SOC of 100% in J/g.

The enthalpy value is measured by differential scanning calorimetry (DSC), and the value is determined by integrating a peak area of a DSC curve.

In this disclosure, by blending manganese iron lithium oxide into lithium nickel cobalt manganese oxide, and by adjusting the contents of the lithium nickel cobalt manganese oxide and the manganese iron lithium oxide, the compaction density (PD, in $g/cm^3$) of the cathode and the enthalpy value (H, in J/g) of the cathode within an appropriate range, the thermal stability of the lithium-ion battery can be significantly improved.

The manganese iron lithium oxide is added to a slurry of the lithium nickel cobalt manganese oxide of the lithium-ion battery. By controlling the content of the manganese iron lithium oxide and the preparation process, it enables the manganese iron lithium oxide particles to fill the voids between the lithium nickel cobalt manganese oxide particles during the subsequent compaction process, thus enhancing thermal stability thereof, and preventing thermal runaway in a high-temperature environment. The possible reasons for a reduction in a risk of thermal runaway are as follows:

When the manganese iron lithium oxide is blended with the lithium nickel cobalt manganese oxide, the manganese iron lithium oxide fills the voids between the lithium nickel cobalt manganese oxide particles, thus raising the thermal decomposition temperature of the prepared cathode. Accordingly, during the usage of the battery, the oxygen release is lower, which effectively increases the thermal decomposition temperature of the cathode and reduces gas release. Meanwhile, a film resistance of the cathode can be increased to a certain extent. When the separator in the battery fails at a high temperature, a short-circuit current caused by a contact between the cathode and the anode decreases, further reducing the release rate of heat and avoiding the occurrence of thermal runaway. Moreover, the manganese iron lithium oxide and lithium nickel cobalt manganese oxide have matching working voltages, thereby improving the comprehensive performance of the lithium-ion battery.

It should be noted that the enthalpy value (H, in J/g) of the cathode is represented by a peak area value of the DSC curve of the cathode in a fully charged (100% SOC) lithium-depleted state (i.e., delithiated state) in the DSC test. In some embodiments, the DSC test condition comprises a temperature range of 25°C to 400°C, with a heating rate of 5°C/min. The weight percentage of the manganese iron lithium oxide in the cathode active material can be determined through elemental analysis (such as an analysis of the Fe content).

In some embodiments, the cathode satisfies: $1 \leq R \leq 3$. When the R value of the cathode is within this range, in addition to excellent thermal stability and high safety performance, the prepared lithium-ion battery also has more excellent cycle stability.

Cathode active material

The cathode active material comprises lithium nickel cobalt manganese oxide and manganese iron lithium oxide. In some embodiments, $D_{v50}$ of the lithium nickel cobalt manganese oxide is greater than $D_{v50}$ of the manganese iron lithium oxide. $D_{v50}$ is a particle size corresponding to the cumulative volume percentage of the cathode active material (manganese iron lithium oxide and lithium nickel cobalt manganese oxide) reaching 50%, with a unit of $\mu m$.

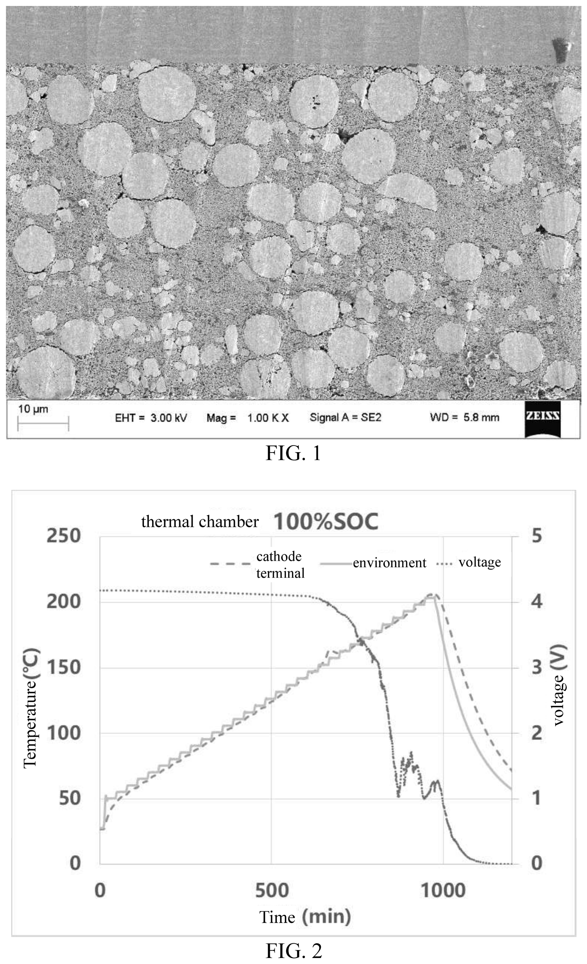

In the cathode active material of the cathode of this disclosure, since the particle size of the manganese iron lithium oxide is much smaller than that of the lithium nickel cobalt manganese oxide, it can fill the voids between the lithium nickel cobalt manganese oxide particles, making the particles contact more closely and reducing the ion diffusion path. Further, the partical size difference between two oxides also enable manganese iron lithium oxide to effectively encapsulate the lithium nickel cobalt manganese oxide particles (see FIG. 1), thus reducing the contact between the lithium nickel cobalt manganese oxide and the electrolyte.

It should be noted that for the determination of particle sizes ($D_{v50}$) of the manganese iron lithium oxide and the lithium nickel cobalt manganese oxide in the cathode active material of the cathode in a battery product, it is necessary to disassemble the battery, separate and bake the cathode, scrape cathode active material powder from the cathode, and analyze the cathode active material powder by a scanning electron microscope (SEM) and a particle size distribution tester:

Energy dispersive spectroscopy (EDS) scanning is performed on a selected visible area through SEM, to indentify the manganese iron lithium oxide and the lithium nickel cobalt manganese oxide. Accordingly, percentages of the manganese iron lithium oxide and the lithium nickel cobalt manganese oxide in the cathode active material powder can be determined. Then, the cathode active material powder is subjected to particle size distribution testing using a particle size distribution tester, and the resulting particle size distribution spectrum will show two characteristic peaks, wherein the peak area represents a content of the substance. By correlating the percentages of the manganese iron lithium oxide and the lithium nickel cobalt manganese oxide determined by SEM, the particle size represented by each characteristic peak can be assigned to either manganese iron lithium oxide or lithium nickel cobalt manganese oxide. Accordingly, the particle sizes of the manganese iron lithium oxide and the lithium nickel cobalt manganese oxide in the cathode active material of the battery product can be determined.

In some embodiments, the $D_{v50}$ of the manganese iron lithium oxide is 0.15 $\mu m$ to 10 $\mu m$. For example, it can be any one selected from 0.15 $\mu m$, 0.2 $\mu m$, 0.25 $\mu m$, 0.3 $\mu m$, 0.45 $\mu m$, 0.5 $\mu m$, 0.8 $\mu m$, 1 $\mu m$, 3 $\mu m$, 5 $\mu m$, 7 $\mu m$, 10 $\mu m$, or a range composed of any two values therein.

In some embodiments, the $D_{v50}$ of the manganese iron lithium oxide is 0.2 $\mu m$ to 5 $\mu m$.

In some embodiments, the $D_{v50}$ of the manganese iron lithium oxide is 0.22 $\mu m$ to 0.9 $\mu m$.

In some embodiments, the $D_{v50}$ of the manganese iron lithium oxide is 0.2 $\mu m$ to 0.6 $\mu m$.

In some embodiments, the $D_{v50}$ of the lithium nickel cobalt manganese oxide is 1 $\mu m$ to 20 $\mu m$. For example, it can be any one selected from 1 $\mu m$, 3 $\mu m$, 5 $\mu m$, 5.5 $\mu m$, 6 $\mu m$, 7 $\mu m$, 7.3 $\mu m$, 7.8 $\mu m$, 8 $\mu m$, 8.2 $\mu m$, 8.7 $\mu m$, 9 $\mu m$, 9.3 $\mu m$, 9.6 $\mu m$, 10 $\mu m$, 12 $\mu m$, 14 $\mu m$, 15 $\mu m$, 18 $\mu m$, 20 $\mu m$, or a range composed of any two values therein.

In some embodiments, the $D_{v50}$ of the lithium nickel cobalt manganese oxide is 6 $\mu m$ to 12 $\mu m$.

In some embodiments, the $D_{v50}$ of the lithium nickel cobalt manganese oxide is 6.8 $\mu m$ to 10 $\mu m$.

In some embodiments, the $D_{v50}$ of the lithium nickel cobalt manganese oxide is 6.7 $\mu m$ to 9.3 $\mu m$.

In some embodiments, a ratio of the $D_{v50}$ of the lithium nickel cobalt manganese oxide to the $D_{v50}$ of the manganese iron lithium oxide is not less than 20.

In some embodiments, the weight percentage $\omega$ of the manganese iron lithium oxide in the cathode active material is 20% to 50%. If a content of the manganese iron lithium oxide is too low, it cannot effectively encapsulate the lithium nickel cobalt manganese oxide, resulting in ineffective improvement of the thermal stability of the lithium-ion battery. Since the electrical conductivity of manganese iron lithium oxide itself is poor, if the content of the manganese iron lithium oxide is too high, it will reduce the energy density of the prepared lithium-ion battery; and meanwhile, with the decrease of the compaction density, the cycle stability of the obtained lithium-ion battery will decrease. When the weight percentage of the manganese iron lithium oxide is within this range, it can balance thermal stability, safety and cycle stability of the lithium-ion battery.

In some embodiments, in the lithium nickel cobalt manganese oxide, a molar percentage of nickel, denoted as n1, is at least 80%, wherein the molar percentage n1 is $100\% \times$ (moles of nickel in the lithium nickel cobalt manganese oxide)/ (total moles of all non-lithium metal elements in the lithium nickel cobalt manganese oxide). That is, the lithium nickel cobalt manganese oxide in this disclosure belongs to high-nickel ternary cathode material. The main role of nickel is to increase the energy density and improve the driving range of the battery. In some embodiments, a chemical formula of the lithium nickel cobalt manganese oxide is $Li_{0.95-1.05}Ni_xCo_yMn_zM_{1-x-y-z}O_{2-m}A_m$, $0.8 \leq x \leq 0.9$, $0.8 < x + y + z \leq 1$, $0 \leq m < 2$, wherein M and A are doping elements, M comprises at least one selected from the group consisting of Mg, Ti, Zn, Zr, Nb, Sr, Y, or Al, and A comprises at least one selected from the group consisting of N, F, S, or Cl.

The lithium nickel cobalt manganese oxide can be a single crystal particle, a polycrystalline particle, or a mixture thereof, wherein, a polycrystalline particle material has better ionic diffusion performance, thus having better cycle stability; while the single crystal particle material has a higher voltage and better safety performance. In some embodiments, the lithium nickel cobalt manganese oxide is at least one selected from the group consisting of a polycrystalline material with a Ni mole percentage of at least 80% and less than 90%, a single crystal material with a Ni mole percentage of at least 80% and less than 90%, a polycrystalline material with a Ni mole percentage of at least 90%, or a single crystal material with a Ni mole percentage of at least 90%.

In some embodiments, at least a part of the lithium nickel cobalt manganese oxide is a single crystal particle.

In the manganese iron lithium oxide, the increase of the content of manganese element (Mn) can make both the charging/discharging platform and the energy density of the material higher. However, in a charged state, $Mn^{3+}$ will generate strong electronic lattice interactions (the Jahn-Teller effect), which will reduce the stability of crystal structure and lower safety performance. On the other hand, $Mn^{3+}$ is prone to undergo disproportionation to form $Mn^{2+}$ ions. The generated $Mn^{2+}$ is very easy to dissolve in the electrolyte and reacts with the electrolyte to generate heat. Moreover, $Mn^{2+}$ will diffuse to the anode surface and be reduced to Mn metal, which reduces the lithium storage points in the anode and increases the risk of separator puncture, thereby increasing the short-circuit rate of the battery in the thermal chamber experiment. In some embodiments, in the manganese iron lithium oxide, a molar percentage of manganese, denoted as n2, satisfies $0 \leq n2 \leq 90$, wherein the molar percentage n2 is 100% $\times$ (moles of manganese in the manganese iron lithium oxide)/ (total moles of all non-lithium metal elements in the manganese iron lithium oxide). In some embodiments, a chemical formula of the manganese iron lithium oxide is $Li_{0.9-1.1}Mn_aFe_{1-a}PO_4$, wherein $0.5 \leq a \leq 0.9$.

<u>Cathode</u>

In this disclosure, the cathode comprises cathode active material (lithium nickel cobalt manganese oxide and manganese iron lithium oxide), as well as a binder and a conductive agent. The cathode of this disclosure is prepared by mixing the cathode active material, the binder, and the conductive agent into a solvent to form a cathode active slurry, coating the slurry onto a cathode current collector, then drying, pressing, cutting into strips (i.e., slitting) and die-cutting. In some embodiments, a weight percentage of the cathode active material: the binder: the conductive agent in the cathode slurry is (95-99): (1-2): (1.5-2.5).

Since the particle size of the manganese iron lithium oxide is smaller than that of the lithium nickel cobalt manganese oxide, the higher the percentage of the manganese iron lithium oxide, the higher the quantity of the binder (such as polyvinylidene fluoride, namely PVDF) required in the cathode slurry. In some embodiments, a percentage of the binder in the cathode slurry is 1.0wt% to 2.0 wt%.

Conventional binders, conductive agents and solvents in the field can all be used in this disclosure. In some embodiments, the binder comprises conventional PVDF; the conductive agent comprises at least one selected from the group consisting of conductive carbon black or carbon nanotubes; the solvent comprises NMP (N-methylpyrrolidone).

In some embodiments, the compaction density of the cathode (PD, $g/cm^3$)is within a range of 2.3 $g/cm^3$ to 3.5 $g/cm^3$, for example, it can be any one selected from 2.3 $g/cm^3$, 2.4 $g/cm^3$, 2.5 $g/cm^3$, 2.6 $g/cm^3$, 2.7 $g/cm^3$, 2.8 $g/cm^3$, 3.0 $g/cm^3$, 3.2 $g/cm^3$, 3.5 $g/cm^3$, or a range composed of any values therein. Further, it can be 2.6 $g/cm^3$ to 3.0 $g/cm^3$. The lower the compaction density of the cathode, the higher the reaction activity of the cathode active material with the electrolyte in the lithium-ion battery, and the lower the safety. However, if the compaction density of the cathode is too high, it is likely to prevent the electrolyte from effectively infiltrating the cathode, resulting in phenomena such as a sudden drop in cycle performance. When the compaction density is within the above range, the prepared lithium-ion battery has excellent safety and cycle performance.

In some embodiments, the compaction density of the cathode is calculated according to the following formula:

Compaction density of the cathode = Areal density of the cathode / (Thickness of a compacted cathode - Thickness of the cathode current collector), with a unit of $g/cm^3$.

In some embodiments, the compaction density is measured by a compaction density instrument, and the Chinese national standard GB/T24533-2019 can be referred to for the testing process.

In some embodiments, the enthalpy value of the cathode (H, in J/g) is within a range of 240 J/g to 1300 J/g, for example, it can be any one selected from 240 J/g, 260 J/g, 280 J/g, 300 J/g, 400 J/g, 450 J/g, 500 J/g, 600 J/g, 650 J/g, 700 J/g, 800 J/g, 850 J/g, 900 J/g, 980 J/g, 1000 J/g, or a range composed of any two values therein. Further, it can be 500 J/g to 1000 J/g. The enthalpy value reflects the heat released by the cathode at a high temperature, and the higher this value, the lower the thermal stability of the cathode. It is understood that the enthalpy value of the cathode is related to the composition of the cathode active material, the compaction density and the homogenization process. By regulating the composition of the cathode active material, the compaction density and the homogenization process of the cathode, the enthalpy value can be controlled within this range.

In some embodiments, the cathode current collector is an aluminum foil. The thickness of the aluminum foil is 10 $\mu$m to 15 $\mu$m. A thinner aluminum foil can increase the energy density of the lithium-ion battery. However, if the thickness of the aluminum foil is too small, it is prone to problems such as wrinkling and edge curling during processing.

Lithium-ion battery

The lithium-ion battery in this disclosure is prepared by the following steps: the cathode, a separator, and an anode are wound together to complete an assembly; after assembly, the tabs are welded, and then the assembly is placed in an aluminum-plastic film housing; the electrolyte is injected into the housing, and then processes such as encapsulation, standing, formation, aging, and shaping are performed to finally form the battery.

The conventional anodes, separators, electrolytes, and assembly processes can all be used in this disclosure.

The anode comprises a anode active material and a anode current collector. The anode active material comprises graphite. The anode current collector may be a copper foil, such as a copper foil with a thickness of 5 $\mu$m to 8 $\mu$m.

The separator comprises at least one selected from the group consisting of polyethylene, polypropylene, or polyvinylidene fluoride, but is not limited to these.

The electrolyte comprises an electrolyte salt and an organic solvent. The electrolyte salt comprises but not limited to at least one selected from the group consisting of lithium hexafluorophosphate, lithium organic borate, lithium perchlorate, or lithium sulfonimide; the organic solvent comprises but not limited to at least one selected from the group consisting of a cyclic carbonate, a linear carbonate, or a carboxylate ester.

This disclosure provides the following examples to facilitate an understanding of this disclosure. These examples are not intended to limit the scope of the present disclosure.

Example 1

A lithium-ion battery was provided in this example, and the specific preparation process was as follows:

Preparation of a cathode

The manganese iron lithium oxide used in this example had a chemical formula of $LiMn_{0.6}Fe_{0.4}PO_4$ (LMFP), with a $D_{v50}$ of 0.29 $\mu$m; the lithium nickel cobalt manganese oxide was a polycrystalline material with a mole percentage of Ni of 83%, and its chemical formula was $LiNi_{0.83}Co_{0.1}Mn_{0.07}O_2$, with a $D_{v50}$ of 8.3 $\mu$m.

S1. Preparation of a cathode active slurry

The lithium nickel cobalt manganese oxide, a conductive (carbon black), and a binder (PVDF) were added to a mixing tank, blended for 20 minutes using a planetary mixer, then the manganese iron lithium oxide was added and blended for 20 minutes, then a solvent (NMP) and carbon nanotubes were added and blended for 30 minutes, dispersed for 5 minutes, and then further dispersed for 240 minutes, then NMP was added to adjust the viscosity of the slurry to 4000 cps, and finally a resulting mixture was subjected to vacuum preserve to eliminate bubbles to obtain the cathode active slurry;

wherein the lithium nickel cobalt manganese oxide and the manganese iron lithium oxide were the cathode active materials, a weight ratio of the lithium nickel cobalt manganese oxide to the manganese iron lithium oxide was 2:8, that is, the weight percentage $\omega$ of the manganese iron lithium oxide in the cathode active material was 80%; and a weight ratio of each raw material in the cathode active slurry was the cathode active materials: the conductive (carbon black): carbon nanotubes: the binder (PVDF) = 96.5: 1.7: 0.5: 1.3.

S2. Preparation of the cathode

The prepared cathode active slurry was passed through a 150-mesh double-layer filter cloth, then applied to two sides of an aluminum foil with a thickness of 12 $\mu$m by transfer coating, then heat-dried in a drying oven; then, a dried cathode was cold-pressed (the compression density after cold pressing was shown in Table 1), cut into stripes, and die-cut to obtain the cathode.

Preparation of an anode

S1. Preparation of an anode active slurry

The anode active material graphite and a conductive (carbon black) were added to a mixing tank, blended for 15 minutes using a planetary mixer. Deionized water was added and blended for 10 minutes for kneading, the kneading state was monitored. Then a resulting mixture was fully dispersed for 60 minutes; then a dispersant (CMC, carboxymethyl cellulose) and deionized water were added and blended for 5 minutes, fully dispersed for 60 minutes. Deionized water was further added to adjust a slurry viscosity to 3500 cps, then a binder (SBR, styrene-butadiene rubber) was added and blended for 15 minutes. Deionized water was added to adjust a slurry viscosity to 5000 cps, and finally a resulting mixture was subjected to vacuum preserve to eliminate bubbles to obtain the anode active slurry;

wherein, a weight ratio of each raw material in the anode active slurry was the anode active material: the conductive (carbon black): the dispersant (CMC): the binder (SBR) = 96.5: 0.7: 1.0: 1.8.

S2. Preparation of the anode

The prepared anode active slurry was passed through a 150-mesh double-layer filter cloth, then applied to two sides of a copper foil with a thickness of 6 $\mu$m by transfer coating, heat-dried in a drying oven during the coating; then, a dried anode was cold-pressed, cut into stripes, and die-cut to obtain the anode.

Assembly of a lithium-ion battery

The prepared cathode, a separator, and the anode were stacked for assembly. After assembly, the tabs were welded, then a stacking structure was placed in an aluminum plastic film housing; the electrolyte was injected into the housing, then the lithium-ion battery was obtained through processes such as packaging, standing, formation, aging and shaping.

In this example, the separator had a model of Enjie BP129B, and the composition thereof was base membrane with a thickness of 7 $\mu$m + single-sided ceramic coating with a thickness of 3 $\mu$m + single-sided organic coating with a thickness of 5 $\mu$m. The ceramic coating was used to increase the mechanical strength of the separator, thereby enhancing the high-temperature resistance and puncture resistance of the battery. During the assembly, the organic coating was faced to the cathode, and it was used to increase the adhesion between the cathode and the separator, which can to some extent reduce the escape of gas and reduce the electrolyte at the interface.

In the electrolyte of this example: the organic solvent was ethylene carbonate, the electrolyte salt was lithium hexafluorophosphate, and a concentration of the electrolyte salt was 1M.

Example 2

A lithium-ion battery was provided in this example, which was prepared according to the method of Example 1. The difference from Example 1 was that in the cathode active material, a weight ratio of the lithium nickel cobalt manganese oxide to the manganese iron lithium oxide was 4:6.

Example 3

A lithium-ion battery was provided in this example, which was prepared according to the method of Example 1. The difference from Example 1 was that in the cathode active material, a weight ratio of the lithium nickel cobalt manganese oxide to the manganese iron lithium oxide was 5:5.

Example 4

A lithium-ion battery was provided in this example, which was prepared according to the method of Example 1. The difference from Example 1 was that a weight ratio of the lithium nickel cobalt manganese oxide to the manganese iron lithium oxide was 6:4.

Example 5

A lithium-ion battery was provided in this example, which was prepared according to the method of Example 1. The difference from Example 1 was that a weight ratio of the lithium nickel cobalt manganese oxide to the manganese iron lithium oxide was 7:3.

Example 6

A lithium-ion battery was provided in this example, which was prepared according to the method of Example 1. The difference from Example 1 was that a weight ratio of the lithium nickel cobalt manganese oxide to the manganese iron lithium oxide was 8:2.

Example 7

A lithium-ion battery was provided in this example, which was prepared according to the method of Example 1. The difference from Example 1 was that the manganese iron lithium oxide had a chemical formula of $LiMn_{0.5}Fe_{0.5}PO_4$ (LMFP), and $D_{v50}$ was 0.29 $\mu$m.

Example 8

A lithium-ion battery was provided in this example, which was prepared according to the method of Example 1. The difference from Example 1 was that the manganese iron lithium oxide had a chemical formula of $LiMn_{0.9}Fe_{0.1}PO_4$ (LMFP), and $D_{v50}$ was 0.29 $\mu$m.

Example 9

A lithium-ion battery was provided in this example, which was prepared according to the method of Example 1. The difference from Example 1 was that the manganese iron lithium oxide had a chemical formula of $LiMn_{0.4}Fe_{0.6}PO_4$ (LMFP), and $D_{v50}$ was 0.29 $\mu$m.

Example 10

A lithium-ion battery was provided in this example, which was prepared according to the method of Example 1. The difference from Example 1 was that the lithium nickel cobalt manganese oxide was a single crystal material with a Ni mole percentage of at least 80% and less than 90%, and $D_{v50}$ was 8.3 $\mu$m.

Example 11

A lithium-ion battery was provided in this example, which was prepared according to the method of Example 1. The difference from Example 1 was that the lithium nickel cobalt manganese oxide was a blended lithium nickel cobalt manganese oxide composed of a single crystal material with a Ni mole percentage of at least 80% and less than 90% (the same as that in Example 10) and a polycrystalline material with a Ni mole percentage of at least 80% and less than 90% (the same as that in Example 1) with a weight ratio of 1:1.

Example 12

A lithium-ion battery was provided in this example, which was prepared according to the method of Example 1. The difference from Example 1 was that the $D_{v50}$ of the manganese iron lithium oxide (LMFP) was 0.6 $\mu$m; the $D_{v50}$ of lithium nickel cobalt manganese oxide was 9 $\mu$m.

Example 13

A lithium-ion battery was provided in this example, which was prepared according to the method of Example 1. The difference from Example 1 was that the $D_{v50}$ of the manganese iron lithium oxide (LMFP) was 0.6 $\mu$m; the $D_{v50}$ of lithium nickel cobalt manganese oxide was 12 $\mu$m.

Example 14

A lithium-ion battery was provided in this example, which was prepared according to the method of Example 1. The difference from Example 1 was that the $D_{v50}$ of the manganese iron lithium oxide (LMFP) was 0.2 $\mu$m; the $D_{v50}$ of lithium nickel cobalt manganese oxide was 6 $\mu$m.

Comparative Example 1

A lithium-ion battery was provided in this comparative example, which was prepared according to the method of Example 1. The difference from Example 1 was that in the cathode active material, the manganese iron lithium oxide was replaced by the lithium nickel cobalt manganese oxide in an equal amount, that is, the cathode active material was lithium nickel cobalt manganese oxide alone.

Comparative Example 2

A lithium-ion battery was provided in this comparative example, which was prepared according to the method of Example 1. The difference from Example 1 was that a weight ratio of the lithium nickel cobalt manganese oxide to the manganese iron lithium oxide was 9:1.

Comparative Example 3

A lithium-ion battery was provided in this comparative example, which was prepared according to the method of Example 1. The difference from Example 1 was that a weight ratio of the lithium nickel cobalt manganese oxide to the manganese iron lithium oxide was 1:9.

Comparative Example 4

A lithium-ion battery was provided in this comparative example, which was prepared according to the method of Example 1. The difference from Example 1 was that the compaction density was different, and the specific details can be found in Table 1.

The cathode active materials, cathodes and lithium-ion batteries obtained from the above examples and comparative examples were tested for performances thereof. The specific test items, test methods and results were as follows:

1) The morphology of the cathode active material on a surface of the cathode was observed by using a scanning electron microscope (SEM). FIG. 1 shows the morphology of the cathode in the lithium-ion battery of Example 1. As can be seen from FIG. 1 that manganese iron lithium oxide fills the voids between lithium nickel cobalt manganese oxide particles, thus making the contact between particles more closely.

2) Thermal stability and safety test of the lithium-ion battery - thermal chamber test:

A lithium-ion battery was fully charged to 4.25V at a 0.33C rate and placed in the thermal chamber for testing. The thermal chamber was heated at a rate of 5°C/min from room temperature to 50°C, and then heated at 5°C gradient intervals with the same heating rate until the temperature reached 200°C. The battery was kept at each gradient temperature for 30 minutes. In this disclosure, if the following situations occurred, the test would be stopped: a. the environmental temperature reached an upper limit temperature of 200°C or above (without destructive events); b. disruptive events occurred, such as battery fires, explosions, etc.

In the tests of this disclosure, if the discharge voltage was $\leq 4V$, it was considered as a battery short circuit. When the battery voltage reached 4V, the heating temperature of the thermal chamber was the battery short circuit temperature T2 (the higher T2 is, the better the thermal stability of the battery is, and the lower the short circuit rate is); and the highest temperature monitored in the battery from a battery short circuit occurring to the end of the test was the peak temperature T1 after the battery short circuit (T1 indicates whether a thermal runaway occurs, if a thermal runaway occurs, the battery temperature will be suddenly increased to over 200°C).

3) Cycle stability: A charging and discharging cycle test was conducted in an environment at 25°C. The specific cycle process was: the lithium-ion battery was charged at 1C and discharged at 1C for cycling, with a charging and discharging voltage range of 2.8V - 4.25V. Before the cycling, a discharge capacity C1 was measured at 0.33C/0.33C charging and discharging, and the cycling was conducted according to this cycle condition. The discharge capacity after t cycles was recorded as Ct, then the capacity retention rate (%) of the battery after t cycles (the cycle capacity retention rate) = Ct / C1 * 100%, and the maximum number of cycles where the battery's cycle capacity retention rate remained at least 80% was recorded.

For the lithium-ion batteries obtained from the above examples and comparative examples in this disclosure, performance parameters thereof were shown in Table 1:

Table 1 Performance parameters of lithium-ion batteries

| Sample | Weight percentage of LMFP ($\omega$) (%) | Compaction density (PD) (g/cm$^3$) | Enthalpy value (H) (J/g) | R value | Short-circuit temperature T2 (°C) | Peak temperature T1 after short circuit of the battery(°C) | Thermal runaway at 200°C? | Cycle stability |
|---|---|---|---|---|---|---|---|---|
| Example 1 | 80 | 2.4 | 247.2 | 3.48 | 172 | 200 | NO | 2000cls |
| Example 2 | 60 | 2.5 | 466.5 | 2.44 | 170 | 200 | NO | 2150cls |
| Example 3 | 50 | 2.6 | 726.9 | 1.97 | 168 | 200 | NO | 2200cls |
| Example 4 | 40 | 2.7 | 927.4 | 1.58 | 167 | 200 | NO | 2300cls |
| Example 5 | 30 | 3.0 | 987.5 | 1.31 | 164 | 200 | NO | 2420cls |
| Example 6 | 20 | 3.2 | 1168 | 0.91 | 161 | 200 | NO | 2500cls |
| Example 7 | 80 | 2.4 | 220.8 | 3.56 | 173 | 200 | NO | 2200cls |
| Example 8 | 80 | 2.4 | 247.2 | 3.48 | 160 | 200 | NO | 1800cls |
| Example 9 | 80 | 2.3 | 250.1 | 3.33 | 175 | 200 | NO | 2400cls |
| Example 10 | 80 | 2.3 | 217.8 | 3.42 | 174 | 200 | NO | 1900cls |
| Example 11 | 80 | 2.35 | 226.5 | 3.47 | 173 | 200 | NO | 1970cls |
| Example 12 | 80 | 2.4 | 247.2 | 3.48 | 171 | 200 | NO | 1856cls |
| Example 13 | 80 | 2.4 | 247.2 | 3.48 | 172 | 200 | NO | 1963cls |
| Example 14 | 80 | 2.4 | 247.2 | 3.48 | 173 | 200 | NO | 2123cls |
| Comparative Example 1 | 0 | 3.5 | 1327 | 0.00 | 152 | 469 | YES | 2640cls |
| Comparative Example 2 | 10 | 3.3 | 1299 | 0.46 | 152 | 473 | YES | 2550cls |
| Comparative Example 3 | 90 | 2.35 | 195.1 | 4.01 | 175 | 200 | NO | 1500cls |
| Comparative Example 4 | 80 | 2.8 | 255.3 | 4.04 | 140 | 485 | NO | 1200cls |

As can be seen from the above results, that:

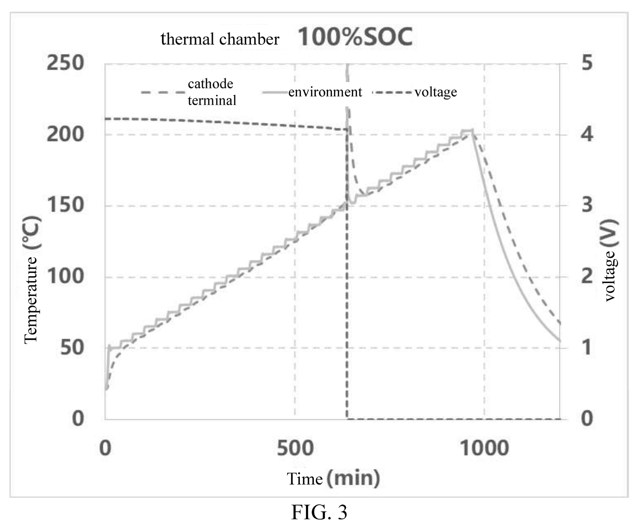

By comparing the thermal abuse curve of Example 6 (FIG. 2) with that of Comparative Example 1 (FIG. 3), it can be known that thermal runaway occurs in a ternary battery with a Ni mole percentage of at least 80% and less than 90% in the cathode, without manganese iron lithium oxide (Comparative Example 1) at around 152°C, the battery temperature rises sharply, a fire phenomenon occurs, and the R value is < 0.5; while a battery with only 20% manganese iron lithium oxide (Example 6) does not experience thermal runaway until 200°C. This indicates that the addition of manganese iron lithium oxide can effectively increase the thermal stability of a high-nickel ternary cathode material with a Ni mole percentage of at least 80% and less than 90% and prevent the occurrence of thermal runaway.

The results of Examples 1-14 of this disclosure and Comparative Examples 1-4 also show that an R value within a range of 0.5 and 4 can prevent thermal runaway of lithium-ion batteries during a thermal chamber test (at least up to 200°C); and higher content of manganese iron lithium oxide can be blended and doped in a high-nickel ternary cathode material.

Finally, it should be noted that the above examples are only used to illustrate the technical solution of the present disclosure and do not limit the scope of protection of the present disclosure. Although the detailed description of the present disclosure is made with reference to the preferred embodiments, ordinary technicians in the field should understand that the technical solution of the present disclosure can be modified or equivalently replaced without departing from the essence and scope of the technical solution.

**Claims**

1. A lithium-ion battery, comprising a cathode and an anode, wherein the cathode comprises a cathode current collector and a cathode active layer arranged on at least one surface of the cathode current collector, the cathode active layer comprises a cathode active material, and the cathode active material comprises lithium nickel cobalt manganese oxide and manganese iron lithium oxide;

    wherein the cathode satisfies: $0.5 \leq R \leq 4$; and
    wherein $R = 10 \times \omega \times PD / \ln(H)$, $\omega$ is a weight percentage of the manganese iron lithium oxide in the cathode active material, PD is a compaction density of the cathode in $g/cm^3$, and H is an enthalpy value of the cathode at a battery SOC of 100% in J/g.

2. The lithium-ion battery according to claim 1, wherein the cathode satisfies: $1 \leq R \leq 3$.

3. The lithium-ion battery according to claim 1, wherein the $\omega$ is 20% to 80%.

4. The lithium-ion battery according to claim 3, where the $\omega$ is 20% to 50%.

5. The lithium-ion battery according to claim 1, wherein the PD is $2.3 \ g/cm^3$ to $3.5 \ g/cm^3$.

6. The lithium-ion battery according to claim 5, wherein the PD is $2.6 \ g/cm^3$ to $3.0 \ g/cm^3$.

7. The lithium-ion battery according to claim 1, wherein the H is 240 J/g to 1300 J/g.

8. The lithium-ion battery according to claim 7, wherein the H is 500 J/g to 1000 J/g.

9. The lithium-ion battery according to any one of claims 1 to 8, wherein in the lithium nickel cobalt manganese oxide, a molar percentage of nickel, denoted as n1, is at least 80%, wherein the molar percentage n1 is 100% $\times$ (moles of nickel in the lithium nickel cobalt manganese oxide)/ (total moles of all non-lithium metal elements in the lithium nickel cobalt manganese oxide).

10. The lithium-ion battery according to any one of claims 1 to 8, wherein a molar percentage of manganese, denoted as n2, satisfies $0 \leq n2 \leq 90$, wherein the molar percentage n2 is 100% $\times$ (moles of manganese in the manganese iron lithium oxide)/ (total moles of all non-lithium metal elements in the manganese iron lithium oxide).

11. The lithium-ion battery according to any one of claims 1 to 8, wherein $D_{v50}$ of the lithium nickel cobalt manganese oxide is greater than $D_{v50}$ of the manganese iron lithium oxide.

12. The lithium-ion battery according to any one of claims 1 to 8, wherein at least a part of the lithium nickel cobalt manganese oxide is a single crystal particle.

13. The lithium-ion battery according to any one of claims 1 to 8, wherein the lithium nickel cobalt manganese oxide comprises a single crystal particle, a polycrystalline particle, or a mixture thereof.

14. The lithium-ion battery according to claim 11, wherein the $D_{v50}$ of the manganese iron lithium oxide is 0.15 $\mu$m to 10 $\mu$m, and the $D_{v50}$ of the lithium nickel cobalt manganese oxide is 1 $\mu$m to 20 $\mu$m.

15. The lithium-ion battery according to claim 11, wherein a ratio of the $D_{v50}$ of the lithium nickel cobalt manganese oxide to the $D_{v50}$ of the manganese iron lithium oxide is not less than 20.

16. The lithium-ion battery according to any one of claims 1 to 8, wherein a chemical formula of the lithium nickel cobalt manganese oxide is $Li_{0.95-1.05}Ni_xCo_yMn_zM_{1-x-y-z}O_{2-m}A_m$, wherein $0.8 \leq x \leq 0.9$, $0.8 < x + y + z \leq 1$, $0 \leq m < 2$, M comprises at least one selected from the group consisting of Mg, Ti, Zn, Zr, Nb, Sr, Y, or Al, and A comprises at least one selected from the group consisting of N, F, S, or Cl.

17. The lithium-ion battery according to any one of claims 1 to 8, wherein a chemical formula of the manganese iron lithium oxide is $Li_{0.0-1.1}Mn_aFe_{1-a}PO_4$, wherein $0.5 \leq a \leq 0.9$.

18. An electrical apparatus, comprising the lithium-ion battery according to any one of claims 1 to 17.

FIG. 1

FIG. 2

FIG. 3

## INTERNATIONAL SEARCH REPORT

| International application No. |
| --- |
| **PCT/CN2023/141900** |

**A. CLASSIFICATION OF SUBJECT MATTER**

H01M4/131(2010.01)i; H01M4/525(2010.01)i; H01M4/505(2010.01)i; H01M10/0525(2010.01)i

According to International Patent Classification (IPC) or to both national classification and IPC

**B. FIELDS SEARCHED**

Minimum documentation searched (classification system followed by classification symbols)

H01M4/-; H01M10/-

Documentation searched other than minimum documentation to the extent that such documents are included in the fields searched

Electronic data base consulted during the international search (name of data base and, where practicable, search terms used)

CNTXT, ENTXT, CNKI, CAPLUS, DWPI: 二次电池, 锂离子电池, 正极, 阳极, 集流体, 活性, 锂, 镍, 钴, 铁, 锰, 氧化物, 压实密度, 热焓, 单晶, secondary battery, lithium ion, positive pole, anode, positive electrode, active, Li, Ni, nickel, Co, cobalt, Mn, manganese, Fe, iron, oxide, compaction density, enthalpy, monocrystal, 300858-61-1, 474903-03-2, 474903-03-2, 485386-79-6, 2712637-14-2

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116613277 A (SUNWODA POWER TECHNOLOGY CO., LTD.) 18 August 2023 (2023-08-18) entire description | 1-18 |
| X | CN 116130597 A (SUNWODA ELECTRIC VEHICLE BATTERY CO., LTD.) 16 May 2023 (2023-05-16) description, embodiment 1, and paragraphs 0046, 0055, and 0061 | 1-8, 10-15, 17-18 |
| A | CN 115548260 A (JIANGSU ZENERGY BATTERY TECHNOLOGIES CO., LTD.) 30 December 2022 (2022-12-30) entire description | 1-18 |
| A | US 2011223482 A1 (GS YUASA INTERNATIONAL LTD.) 15 September 2011 (2011-09-15) entire description | 1-18 |
| A | JP 2016076317 A (HITACHI CHEMICAL CO., LTD.) 12 May 2016 (2016-05-12) entire description | 1-18 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 March 2024** | **27 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/141900**

| Patent document cited in search report | | | Publication date (day/month/year) | Patent family member(s) | | | Publication date (day/month/year) |
|---|---|---|---|---|---|---|---|
| CN | 116613277 | A | 18 August 2023 | None | | | |
| CN | 116130597 | A | 16 May 2023 | None | | | |
| CN | 115548260 | A | 30 December 2022 | None | | | |
| US | 2011223482 | A1 | 15 September 2011 | KR | 20110083680 | A | 20 July 2011 |
| | | | | JPWO | 2010053174 | A1 | 05 April 2012 |
| | | | | JP | 5574239 | B2 | 20 August 2014 |
| | | | | EP | 2357693 | A1 | 17 August 2011 |
| | | | | EP | 2357693 | A4 | 30 April 2014 |
| | | | | EP | 2357693 | B1 | 11 July 2018 |
| | | | | JP | 2011159388 | A | 18 August 2011 |
| | | | | JP | 5381024 | B2 | 08 January 2014 |
| | | | | WO | 2010053174 | A1 | 14 May 2010 |
| JP | 2016076317 | A | 12 May 2016 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310787285